# FASCICULE DE BREVET EUROPEEN

(11) **EP 3 274 221 B1**
(45) Date de publication et mention de la délivrance du brevet: **11.03.2020**
(21) Numéro de dépôt: 16713391.7
(22) Date de dépôt: 25.03.2016
(51) Int. Cl.: B60S 3/04, B05B 9/01, B08B 3/02, B05B 7/02

(54) **INSTALLATION DE NETTOYAGE, DE DESINFECTION ET D'ASSAINISSEMENT DE VEHICULES A LA VAPEUR AVEC DISPOSITIF DE SOUFFLAGE OU D'ASPIRATION, LANCE ET PROCEDES DE FONCTIONNEMENT ASSOCIES**
AUSRÜSTUNG ZUR REINIGUNG UND DESINFEKTION VON FAHRZEUGEN MITTELS DAMPF MIT EINER BLAS- ODER ANSAUGVORRICHTUNG UND DÜSE SOWIE ZUGEHÖRIGE BETRIEBSVERFAHREN
EQUIPMENT FOR CLEANING, DISINFECTING AND SANITISING VEHICLES USING STEAM, COMPRISING A BLOWING OR SUCKING DEVICE AND A NOZZLE, AND ASSOCIATED OPERATING METHODS

(30) Priorité: 27.03.2015 FR 1552641
(43) Date de publication de la demande: 31.01.2018
(73) Titulaire: Hilaire, Alain, 38130 Echirolles (FR)
(72) Inventeur: Hilaire, Alain, 38130 Echirolles (FR)
(74) Mandataire: Nony
(86) Numéro de dépôt international: PCT/EP2016/056719
(87) Numéro de publication internationale: WO 2016/156271

(56) Documents cités:
- WO-A1-2014/094368
- CN-Y- 2 895 168
- KR-A- 20000 063 638
- KR-A- 20120 025 205

## Description

### Domaine de l'invention

La présente invention concerne une installation de nettoyage, de désinfection et assainissement de véhicules à la vapeur, ainsi qu'une lance de nettoyage associée et les procédés de fonctionnement d'une telle installation.

Elle se rapporte plus particulièrement à une installation de nettoyage autonome en énergie et en eau, qui tire profit des avantages que présentent les énergies renouvelables.

L'invention concerne notamment une installation de nettoyage économe en eau, susceptible de nettoyer à la fois l'extérieur et l'intérieur de véhicules.

Une application préférée concerne les installations de nettoyage dites en « self-service », c'est-à-dire des installations de nettoyage dont le fonctionnement est directement mis en œuvre par un utilisateur qui est également le client.

### Etat de la technique

Il existe de multiples types d'installations de nettoyage de véhicules automobiles. Certaines sont intégralement automatisées, et comportent des rouleaux-brosses qui nettoient la surface extérieure des véhicules. Ces installations sont très populaires car elles ne nécessitent aucun effort pour l'utilisateur et sont relativement rapides. Cependant, ces installations à rouleaux-brosses utilisent de l'eau potable tirée des réseaux publics, cette eau portable étant en outre additivée à l'aide de produits nocifs la pollue. De ce fait, ces installations présentent un surcoût d'investissement et de fonctionnement lié au traitement de cette eau polluée.

D'autres installations, dites « self-service », laissent à l'utilisateur la libre utilisation d'un matériel mis à leur disposition. Ce matériel comporte typiquement une lance à eau sous haute pression, permettant d'enlever les saletés de la surface extérieure des véhicules. L'eau peut être mélangée préalablement à la sortie de la lance à un produit de nettoyage afin d'augmenter l'efficacité du nettoyage.

Les installations « self-service » à lances à eau haute pression sont moins onéreuses que les installations automatisées. Cependant, elles sont peu économes et nécessitent de grandes quantités d'eau pour laver un véhicule automobile. En outre, elles nécessitent également l'utilisation de produits additifs qui provoquent une pollution de l'eau potable utilisée pour le lavage, ce qui, tout comme pour les installations à rouleaux-brosses, augmente indirectement leur coût.

Récemment, des installations « self-service » équipées de lances fonctionnant à vapeur d'eau, ont été mises en œuvre. On peut citer ici l'exemple d'installations de ce type mises en servie en Espagne par la société OSVIC Maquinaria.

Une installation de nettoyage à la vapeur présente de nombreux intérêts. En particulier, elle est moins coûteuse en investissement qu'une installation automatisée et plus économe en eau qu'une installation fonctionnant à eau sous haute pression. En outre, la vapeur d'eau peut être employée pour nettoyer à la fois l'intérieur et l'extérieur d'un véhicule. Cependant, cette installation utilise également l'eau potable du réseau public et l'électricité issue du réseau de distribution local.

Pour finaliser le nettoyage intérieur, certaines installations fonctionnant à la vapeur d'eau intègrent un système d'aspiration séparé du poste de nettoyage avec lance. Cela contraint donc l'utilisateur à effectuer deux opérations distinctes à deux endroits différents (deux postes différents) avec deux types de matériel différents.

Par ailleurs, certaines de ces installations fonctionnant à la vapeur d'eau mettent également à profit des énergies renouvelables en intégrant un système de génération d'électricité tel que des panneaux photovoltaïques.

Cependant, les installations à la vapeur déjà mises en service présentent encore des inconvénients majeurs que l'on peut énumérer comme suit.

Tout d'abord, ces installations restent tout aussi énergivores en électricité que les installations automatisées ou « self-service » à eau haute pression connues, et elles consomment aussi de l'eau potable tirée du réseau public.

En outre, tout comme les installations à eau sous pression, elles n'offrent pas la possibilité de sécher le véhicule convenablement. Ainsi, en général, l'utilisateur doit conduire le véhicule automobile mouillé à la sortie de l'installation pendant un certain temps afin de permettre à l'air ambiant de sécher le véhicule. Cela est nuisible notamment du fait que le véhicule mouillé peut accumuler des poussières rendant caduque au moins en partie le nettoyage réalisé ou encore que ce séchage naturel peut laisser des traces sur le véhicule.

Par ailleurs, si comme évoqué certaines de ces installations proposent un système d'aspiration distinct du poste de nettoyage avec lance, cela n'est pas très pratique pour l'utilisateur qui doit au mieux changer d'ustensile de nettoyage en laissant son véhicule sur place, au pire le déplacer pour l'amener à proximité du système d'aspiration.

Enfin, la mise en marche de la chaudière d'un générateur de vapeur dans ces installations connues nécessite un temps de chauffe important et donc un temps d'attente important pour l'utilisateur qui peut être un frein à l'attractivité des installations de nettoyage « self-service » à vapeur.

La demande de brevet coréenne KR 20090034133 divulgue une installation de nettoyage de voiture à la vapeur, pour nettoyer à la fois l'intérieur et l'extérieur d'un véhicule par pulvérisation de vapeur à basse pression ou haute pression selon la sélection d'un opérateur à travers une pluralité de commutateurs de pression. La basse pression proposée dans cette installation ne permet pas d'obtenir de la vapeur sèche, ce qui humidifie grandement la surface concernée et par là, une efficacité de nettoyage moindre.

La demande de brevet coréenne KR 20100669923 divulgue une installation de nettoyage de véhicule à la vapeur alimentée en eau par une bouteille d'eau et alimenté en électricité par un panneau solaire.

Ces deux demandes de brevet présentent les mêmes inconvénients que ceux présentés ci-avant, même si la demande KR 20100669923 propose une tentative d'autonomie en énergie électrique qui ne peut être que très partielle puisque dépendante des conditions météorologiques et limitée en capacité du fait de la présence d'un seul panneau solaire. En outre, l'utilisation d'une bouteille d'eau n'est pas réaliste pour une utilisation « self-service » qui doit être dimensionnée pour un grand nombre de véhicules journaliers et nécessite la mise en œuvre d'une pompe à eau.

Le document KR 2000 0063638 A est considéré comme l'état de la technique le plus proche de l'objet de la revendication 1.

Il existe donc un besoin d'améliorer encore les installations de nettoyage de véhicules fonctionnant à vapeur d'eau, notamment afin d'augmenter l'autonomie au moins en électricité, de permettre un séchage convenable des véhicules nettoyés, de faciliter l'aspiration de l'intérieur du véhicule et de réduire le temps d'attente pour un utilisateur
Le but de l'invention est de répondre au moins partiellement à ce besoin.

### Résumé de l'invention

L'invention se rapporte sous un premier de ses aspects à une installation de nettoyage de véhicules, comportant au moins:
- une source d'alimentation en eau ;
- un premier générateur de vapeur relié en amont à la source d'alimentation en eau ;
- un dispositif d'aspiration ou de soufflage adapté pour réaliser un soufflage d'air et une aspiration en mode de fonctionnement inverse à celui du soufflage ;
- une lance de nettoyage comportant :
   - un premier tuyau relié au premier générateur de vapeur,
   - un deuxième tuyau agencé sensiblement parallèle au premier tuyau et relié au dispositif d'aspiration ou de soufflage,
installation dans laquelle le fonctionnement du dispositif d'aspiration ou de soufflage est asservi au fonctionnement du premier générateur de vapeur de sorte à pouvoir générer un soufflage d'air ou une aspiration en sortie du deuxième tuyau simultanément à et à distance de la projection de vapeur en sortie du premier tuyau.

Par « générateur de vapeur », on entend ici et dans le cadre de l'invention un appareil comportant une chaudière qui dégage une chaleur suffisante pour permettre une transformation de l'eau en vapeur.

Comme expliqué ci-après, la vapeur est générée à une température et une pression données, pour être projetée en fonction du mode de nettoyage sélectionné sur et depuis la lance par un utilisateur. En faisant varier la température et la pression de vapeur d'eau, un utilisateur peut adapter ces conditions aux exigences différentes entre un nettoyage extérieur et un nettoyage intérieur d'un véhicule. Si la pression et la température demandées sont inférieures à celles précédentes, alors le temps d'attente pour un utilisateur est quasi nul, et il est typiquement de l'ordre de quelques secondes si la pression et la température demandées sont supérieures.

L'installation selon l'invention intègre donc en un seul ensemble un dispositif d'aspiration réversible en dispositif de soufflage et un générateur de vapeur qui permet un nettoyage à la vapeur simultané avec l'aspiration ou le soufflage d'air.

L'installation peut être facilement mise en fonctionnement en « self-service », l'utilisateur pouvant aspirer et nettoyer à la vapeur l'intérieur de son véhicule et/ou un nettoyage à la vapeur avec séchage de l'extérieur. Le nettoyage à la vapeur à l'intérieur du véhicule réalise une désinfection et, de fait, un assainissement de ce dernier.

Les possibilités de nettoyage envisageables sont multiples, et un utilisateur peut choisir d'aspirer à l'extérieur de son véhicule et de souffler à l'intérieur de son véhicule s'il le souhaite. Le changement de mode de nettoyage peut se faire quasiment en temps réel du fait de l'agencement de la commande du (des) générateur(s) de vapeur et du dispositif de soufflage/aspiration sur la lance, ce qui permet aisément à un utilisateur de passer d'un mode de nettoyage à un autre, avec une température et une pression de vapeur adaptées selon son choix de programme sélectionné.

La modulation de la pression entre un soufflage et une aspiration peut être avantageusement réalisée par des moyens de modification du diamètre interne du deuxième tuyau de la lance comme précisé ci-après.

La modulation de la pression de la vapeur projetée peut être faite avantageusement par fermeture d'un nombre plus ou moins important de tuyères agencées à l'intérieur du premier tuyau de la lance comme précisé également ci-après. Une diminution légère de la pression de vapeur projetée est notamment avantageuse lorsqu'on souhaite nettoyer l'habitacle d'un véhicule sans nuire à l'intégrité des garnitures ou autres revêtements.

Le fait de réaliser un soufflage d'air simultané à et à distance de la projection de vapeur permet à la fois de nettoyer et de sécher efficacement la carrosserie d'un véhicule, ce que ne permettent pas les installations à vapeur d'eau selon l'état de l'art.

A l'inverse, le fait de réaliser une aspiration d'air chargé en poussières simultanée à et à distance de la projection de vapeur permet à la fois de nettoyer et de sécher efficacement l'habitacle d'un véhicule, ce que ne permettent pas non plus les installations à vapeur d'eau selon l'état de l'art.

L'installation comporte un seul et même dispositif pour l'aspiration et le soufflage est économique en termes d'investissement et d'entretien.

Grâce à l'invention, on peut envisager des installations de nettoyage qui permettent avec un unique poste d'obtenir un nettoyage efficace aussi bien à l'intérieur qu'à l'extérieur puisque combinant l'action de la vapeur et celle d'un soufflage (séchage) ou d'une aspiration.

Par ailleurs, dans des cas très spécifiques, il est possible d'envisager une commande complémentaire depuis la lance qui consiste à arrêter momentanément d'une part l'aspiration ou le soufflage ou d'autre part la projection de vapeur. On veille à ce que l'aspiration ou le soufflage ne puisse pas être arrêté en même temps que la vapeur. De préférence, on prévoit de programmer l'unité électronique de contrôle-commande de telle sorte que l'arrêt de l'une ou l'autre ne puisse durer qu'un temps limité, par exemple, de l'ordre de 30 secondes maximum.

L'installation selon l'invention permet ainsi un grand nombre de commandes différenciées, qui induisent des modes de nettoyage variés, ce qui permet d'obtenir une efficacité de nettoyage optimale à la fois pour l'intérieur et l'extérieur d'un véhicule. Cette grande variété de commandes est réalisée simplement pour un utilisateur qui n'a qu'à actionner un nombre restreints de commandes (boutons) tous agencés sur la lance.

On peut prévoir de munir l'installation d'un système de communication d'informations par synthèse vocale pour informer l'utilisateur de l'avancement des différents modes de nettoyage. Par exemple, avantageusement le système peut émettre les messages vocaux suivants : « Nettoyage intérieur en cours », « Nettoyage extérieur en cours » « crédit de temps consommé ». Ces messages peuvent être diffusés à intervalles de temps réguliers, par exemple toutes les 30 secondes, sauf lors de changement effectué par l'utilisateur. Dans ce cas, le changement est immédiatement signalé par message vocal et répété plusieurs fois, par exemple trois fois. Un cycle de messages vocaux peut être réalisé avec une réinitialisation.

Selon un mode de réalisation avantageux, l'installation comporte un deuxième générateur de vapeur distinct du premier générateur de vapeur et relié également à la source d'alimentation en eau, le deuxième générateur de vapeur étant également relié au premier tuyau de la lance, le premier générateur de vapeur comportant chaudière étant de capacité inférieure à celle la seconde du deuxième générateur de vapeur.

La lance peut être reliée avantageusement au(x) générateur(s) de vapeur par des conduits à gaine en acier flexible.

On peut prévoir que l'installation selon l'invention comporte une potence qui soutient la lance et les deux conduits d'amenée de vapeur et d'aspiration ou de soufflage d'air. La totalité de la longueur des conduits peut en outre être isolée thermiquement et protégée du froid par des fils chauffants. On peut en outre prévoir d'intégrer dans l'installation des capteurs de température pour surveiller en permanence la température, et mettre en fonctionnement par asservissement les cordons chauffants pour une durée nécessaire à un chauffage des conduits.

Selon une variante avantageuse, le premier générateur de vapeur est adapté pour générer de la vapeur en un temps plus court que le deuxième générateur. Grâce à cela, on peut réduire drastiquement le temps d'attente d'un utilisateur comparativement aux installations « self-service » à la vapeur selon l'état de l'art. En effet, la génération de la vapeur nécessite l'emploi d'une chaudière qui présente un certain temps de chauffe. Si l'on souhaite éteindre la chaudière entre les utilisations pour économiser de l'électricité, cela signifie qu'il faut par la suite la rallumer à chaque utilisation. Or, dans les installations selon l'état de l'art, une seule chaudière de grande capacité était prévue. Cette chaudière de grande capacité présente un temps de chauffe important, typiquement de 7 à 10 min.

Ainsi, disposer de deux générateurs aux capacités différentes et donc aux temps de chauffe différents permet de s'affranchir de ce désavantage : lors de la mise en marche de l'installation, par un utilisateur, le premier générateur de vapeur de capacité moindre et donc de temps de chauffe relativement faible est mis en marche en même temps que le deuxième générateur de vapeur de plus grande capacité et donc au temps de chauffe relativement plus long.

Typiquement, le premier générateur peut avoir une capacité de l'ordre d'un litre pour un temps chauffe inférieur ou égal à une minute et le deuxième générateur une capacité de l'ordre de 6 à 8 litres pour un temps de chauffe de l'ordre de 7 à 9 minutes.

Autrement dit, le premier générateur permet de fournir de la vapeur pour le nettoyage du véhicule le temps que le deuxième générateur de vapeur atteigne la température et la pression souhaitées et prenne le relai.

Autrement dit encore, avec deux générateurs de vapeur, on permet à utilisateur de ne pas attendre trop longtemps la mise à disposition de la vapeur pour la projection. En effet, le premier générateur de petite capacité de traitement de vapeur, avec une résistance adaptée, permet de réduire le temps d'attente pour mise à disposition de la vapeur, à la température et à la pression voulues, donc pour débuter le nettoyage, au minimum d'une minute. Au bout d'un temps, le fonctionnement du premier générateur est remplacé par celui du deuxième de grande capacité de vapeur qui a atteint les températures et pressions voulues.

Avantageusement, on peut prévoir de récupérer l'énergie de chaleur émise par le premier et/ou le deuxième générateur pour la réinjecter sous forme d'électricité. On peut ainsi prévoir de munir l'installation d'une batterie-tampon supplémentaire à la batterie de stockage de l'électricité fournie par les panneaux PV et/ou l'éolienne. Ainsi, on peut munir le premier et/ou l'autre du premier et deuxième générateurs d'un dispositif de récupération et conversion de chaleur en électricité, l'électricité convertie étant injectée dans la batterie-tampon qui peut alimenter ultérieurement l'un ou l'autre des générateurs.

Avantageusement, l'installation peut comporter au moins un panneau photovoltaïque (PV) relié au premier générateur et/ou au dispositif d'aspiration ou soufflage et le cas échéant au deuxième générateur de vapeur pour l'(les) alimenter en électricité. Les panneaux PV peuvent être dimensionnés pour alimenter en électricité l'ensemble de l'installation selon ses besoins, dont le(s) générateur(s) de vapeur et le dispositif d'aspiration réversible. Ainsi, avantageusement, la surface de panneaux PV est calculée afin d'être à même d'alimenter l'ensemble des besoins de l'installation pour une journée entière d'après la plus faible journée d'ensoleillement envisageable et répertoriée dans le temps passé antérieurement pour le lieu géographique où est implantée l'installation. Cette surface de production d'électricité en courant continu peut être également reliée à un bloc batterie.

L'installation peut comporter en outre au moins une éolienne reliée au premier générateur et/ou au dispositif d'aspiration ou soufflage et le cas échéant au deuxième générateur de vapeur pour l'(les) alimenter en électricité. L'éolienne est de préférence configurée pour pallier à l'éventuelle défaillance de production du (des) panneau(x) photovoltaïques. Dans ce cas, son fonctionnement est asservie à celui du (des) panneau(x) PV : l'éolienne est mise en œuvre dès que la défaillance est constatée par des capteurs de mesure de courant et/ou tension. L'éolienne est avantageusement en fonctionnement de façon constante, afin que, lorsqu'elle n'est pas utilisée à la place des panneaux PV, elle recharge jusqu'à 100 % de la capacité la ou les batteries. Lorsqu'elle n'est pas utilisée à la place des panneaux PV, et que la batterie est rechargée en totalité, alors, l'éolienne est mise au repos. S'il y a décharge, même minime, de la batterie, elle réalimente celle-ci immédiatement, et ainsi de suite. Typiquement, l'éolienne est en capacité de produire de l'électricité 24 H/ 24, dès qu'un vent souffle à au moins 2 m/s.

Le(s) panneau(x) photovoltaïque(s), tout comme l'(les) éolienne(s) permettent notamment la production d'électricité pour alimenter à la fois le ou les générateurs de vapeur et le dispositif d'aspiration ou de soufflage.

Avantageusement, l'(les) éolienne(s) permet (tent) une production d'électricité complémentaire au(x) panneau(x) photovoltaïque(s), notamment durant les périodes de faible ensoleillement.

Selon une variante avantageuse, l'installation comporte au moins une batterie reliée au(x) panneau(x) photovoltaïque(s) et/ou à l'éolienne pour stocker l'électricité produite, la batterie étant en outre reliée au premier au premier générateur et/ou au dispositif d'aspiration ou soufflage et le cas échéant au deuxième générateur de vapeur pour l'(les) alimenter en électricité.

Le surplus d'énergie généré par l'(les) éolienne(s) et/ou par le(s) panneau(x) photovoltaïque(s) peut être stocké dans la batterie. En particulier, l'(les) éolienne(s) permet de produire et/ou de stocker de l'électricité pendant les périodes de nuit, ce qui permet un fonctionnement 24h/24h de l'installation selon l'invention. La batterie chargée peut alimenter même par mauvais temps ou en l'absence de vent.

La batterie ou un ensemble de batteries en série ou en parallèle peut provenir avantageusement de véhicules électriques, qui ont perdues une partie de leurs performances nécessaires à un véhicule en déplacement, mais dont les capacités conservées de stockage peuvent être satisfaisantes pour l'installation selon l'invention. De préférence, la capacité de stockage de la batterie ou de l'ensemble de batteries mis en œuvre est calculée pour alimenter l'ensemble des besoins en énergie électrique de l'installation pour une durée de 2 jours d'utilisation en continu.

Selon un mode de réalisation avantageux et complémentaire, la source d'alimentation en eau est constituée par un dispositif de collecte d'eau de pluie et un réservoir de stockage relié au dispositif de collecte, le réservoir étant relié au premier générateur de vapeur, et le cas échéant au deuxième générateur de vapeur.

L'eau de pluie peut permettre à une installation selon l'invention d'être complètement autonome en eau. Le réservoir de stockage de l'eau de pluie peut en effet être dimensionné pour alimenter l'installation sur une période de 4 à 6 mois, selon la situation géographique et les caractéristiques pluviométriques du lieu. L'eau de pluie présente notamment l'avantage de ne pas nécessiter de traitement préparatif avant d'être envoyée vers la ou les générateurs de vapeur. L'eau de pluie n'apporte aucun élément calcaire susceptible d'altérer l'efficacité des générateurs de vapeur. La durée de vie de l'installation peut donc être considérablement augmentée, et l'exigence d'entretien (maintenance) simplifiée. En outre, en utilisant l'eau de pluie, on peut s'affranchir de tout produit additif pour obtenir une bonne qualité de finition de la carrosserie ou de l'intérieur (tissus, garniture) du véhicule, c'est-à-dire l'absence de traces nuisibles à l'esthétique ou d'humidité susceptibles de dégrader les revêtements intérieurs du véhicule. S'affranchir de tout produit additif a également pour avantage de ne pas avoir de ni de traitement coûteux de dépollution à réaliser une fois le nettoyage réalisé.

De préférence, on peut prévoir des moyens d'agitation de l'eau collectée et stockée, agencés dans le réservoir de stockage. Ces moyens d'agitation qui peuvent être alimentés en électricité directement par le(s) panneau(x) photovoltaïque(s) et/ou par l'(les) éolienne(s) et/ou la batterie permettent avantageusement d'éviter tout risque de gel de l'eau collectée. Ces moyens peuvent prendre la forme de pales de brassage qui peuvent tourner à une vitesse de l'ordre de 5 à 10 cm/s (vitesse à la pointe).

On peut aussi munir avantageusement le réservoir de stockage d'un ou plusieurs filtres notamment des filtres anti-bactéries.

Selon une variante avantageuse, le réservoir de stockage est agencé relativement au premier générateur de vapeur et le cas échéant au deuxième générateur de vapeur pour l'(les) alimenter en eau de pluie par écoulement gravitaire. On évite ainsi des coûts liés à l'investissement, le fonctionnement et la maintenance d'une pompe à eau. L'utilisation d'une pompe n'étant cependant pas exclue, selon les caractéristiques du lieu d'implantation de l'installation et de ses exigences.

L'installation peut comporter avantageusement un récepteur solaire relié à la source d'alimentation en eau pour réchauffer l'eau préalablement à son entrée dans le premier générateur de vapeur et le cas échéant dans le deuxième générateur de vapeur. En fonction de l'implantation de ce récepteur solaire, on prévoit ou non une pompe pour alimenter en eau chauffée par le récepteur le ou les générateurs de vapeur.

Le récepteur solaire permet notamment de garder l'eau provenant de la source d'eau à une température supérieure à la température extérieure à l'installation. Elle peut notamment comprendre des éléments de chauffage solaire passifs et un réservoir, et maintenir l'eau de ce réservoir à une température légèrement inférieure à la température d'ébullition de l'eau. La température de ce réservoir peut notamment être d'environ 90°C. Cela contribue à diminuer le temps d'attente d'un utilisateur lorsque celui démarre l'installation pour nettoyer son véhicule. Le rôle du récepteur solaire est de réduire encore plus le temps d'attente pour la mise à disposition de la vapeur, sans faire appel à la production d'énergie électrique en tant que telle.

L'installation peut comporter avantageusement un bac de récupération des poussières aspirées relié en amont au deuxième tuyau et en aval au dispositif d'aspiration.

L'invention qui vient d'être décrite présente de nombreux avantages comparativement aux installations « self-service » à lance à vapeur selon l'état de l'art. Parmi ces avantages, on peut citer :
- nettoyage, désinfection et assainissement efficace à la fois de l'intérieur et l'extérieur d'un véhicule par la combinaison d'un soufflage ou d'une aspiration asservi simultanément avec une projection de vapeur ; la production de cette vapeur pouvant être adaptée au volume et la surface du véhicule notamment en faisant varier, depuis la lance par l'utilisateur, la température et la pression de la vapeur, d'une part, et l'orientation et la pression de soufflage ou d'aspiration de l'air d'autre part, avec en outre la possibilité d'interrompre momentanément, soit le jet de vapeur, soit l'aspiration ou soufflage en cours;
- une consommation réduite en eau et en électricité, celles-ci étant produites préférentiellement à l'aide d'énergies renouvelables, c'est-à-dire sans utilisation ni consommation de production émanant des réseaux publics, et sans création de pollution d'eau potable issue du réseau public ou autre (pompage dans un cours d'eau ou autre);
- une consommation qui peut être autonome complètement en électricité par le biais d'énergies renouvelables (éolienne(s), panneau(x) photovoltaïque(s)) et en eau du fait de la récupération et l'alimentation exclusive en eau de pluie.

L'invention (pas revendiquée) se rapporte également sous un second aspect à une lance de nettoyage à vapeur destinée à être utilisée dans une installation telle que celle décrite précédemment, comportant :
- un premier tuyau destiné à être relié à au moins générateur de vapeur,
- un deuxième tuyau agencé sensiblement parallèle au premier tuyau, destiné à relié à un dispositif d'aspiration ou de soufflage,
- une première buse d'éjection montée fixe à l'extrémité libre du premier ou du deuxième tuyau ;
- une deuxième buse d'éjection montée coulissante à l'extrémité libre du respectivement deuxième ou premier tuyau entre une position extrême rapprochée dans laquelle son extrémité libre est agencée sensiblement dans le même plan (P) que celle de la première buse d'éjection et une position extrême éloignée dans son extrémité fait saillie de première buse d'éjection.

Ainsi, on peut prévoir sur le corps de lance, soit une buse d'éjection de vapeur mobile par rapport à celle d'aspiration/soufflage soit l'inverse.

Le passage d'une position extrême déployée à une position extrême rapprochée provoque avantageusement le changement de mode d'aspiration et de soufflage et une variation de la pression de vapeur éjectée.

En particulier, lorsque c'est la buse de soufflage/d'aspiration d'air qui est montée coulissante, sa position extrême déployée peut correspondre à un nettoyage extérieur de véhicules avec un soufflage d'air et une éjection simultanée de vapeur. Et sa position extrême rapprochée correspond à un nettoyage intérieur de véhicule avec une aspiration de l'air et une éjection simultanée de vapeur à une pression moindre que pour le nettoyage extérieur.

A contrario, lorsque c'est la buse déjection de vapeur qui est montée coulissante sa position extrême repliée (rapprochée) peut correspondre à un nettoyage intérieur de véhicules avec une aspiration de l'air et une éjection simultanée de vapeur. Et sa position extrême déployée correspond à un nettoyage extérieur de véhicule avec un soufflage d'air et une éjection simultanée de vapeur à une pression supérieure que pour le nettoyage intérieur.

Ainsi, on peut utiliser une lance qui supporte à la fois un tuyau de projection de vapeur et un seul tuyau pour l'aspiration ou le soufflage, la présence de buse coulissante permettant judicieusement de passer du mode d'aspiration au mode de soufflage à partir du même dispositif en amont qui produit une pression nominale donnée.

Selon une variante avantageuse, la deuxième buse d'éjection est montée coulissante autour du deuxième tuyau et le coulissement de la position extrême éloignée à la position extrême rapprochée provoque l'actionnement de moyens de modification du diamètre interne du deuxième tuyau afin d'augmenter la pression de soufflage par rapport à la pression d'aspiration.

Avantageusement, lorsque la buse coulissante est montée sur le tuyau de soufflage/aspiration d'air, elle peut prendre trois positions distinctes :
a/ position « en avant » de la sortie du tuyau de vapeur, cette position déterminant automatiquement par asservissement de commande le fonctionnement en mode d'aspiration de la lance ;
b/ position « au point mort », où elle se situe au niveau de la sortie du tuyau de vapeur, cette position déterminant automatiquement par asservissement de commande l'arrêt, momentané de l'aspiration ou soufflage de l'air ainsi que la projection de vapeur. Cette position de point mort peut être maintenue pendant un certain temps, typiquement au maximum de 1 minute. Un message par synthèse vocale peut alors alerter l'utilisateur de la perte de la disponibilité air/vapeur, et le guide vers les manœuvres de l'embout à effectuer pour, soit mettre fin au service de nettoyage, soit le redémarrer ;
c/ position « en arrière », où elle se situe en recul extrême par rapport à la sortie du tuyau de vapeur, cette position déterminant automatiquement par asservissement de commande un mode de soufflage de la lance.

Le passage de l'une à l'autre de ces positions peut être réalisé par appui sur un bouton monté par exemple dans une poignée de la lance ou latéralement, au droit d l'une ou l'autre des poignées. Un appui prolongé sur ce bouton dépassant par exemple les 5 secondes peut arrêter de toute production de vapeur et d'air. On peut prévoir également la diffusion d'un message vocal pour alerter l'utilisateur de cette interruption de production, par exemple dès que les 5 secondes sont atteintes. La manœuvre de déplacement, vers l'avant ou vers l'arrière, modifiant ainsi les caractéristiques de nettoyage, peut alors être réalisée sans danger et en toute facilité. Le déplacement étant effectué, et après un délai de 5 secondes sans autre mouvement, soit la position restant figée au choix effectué, la production de vapeur et d'air recommence, et le nettoyage continue.

L'intérieur du tuyau dédié à l'aspiration ou au soufflage d'air peut comporter un ou plusieurs éléments qui permet (tent) de faire varier la pression de l'air, d'une part, et l'orientation d'autre. Ainsi, en mode soufflage, l'air est conduit légèrement vers l'extérieur par rapport à l'axe du tuyau, ce qui permet d'écarter le soufflage du jet de vapeur afin d'en préserver l'efficacité maximale.

Avec ce(s) élément(s), la pression de soufflage est différente de la pression d'aspiration.

Selon une variante avantageuse, la buse d'éjection du premier tuyau comporte une pluralité de tuyères et des moyens de fermeture de tout ou partie des tuyères pour augmenter la pression de sortie de la vapeur.

La lance peut comporter une commande automatique, déclenchée électroniquement selon la position de la lance et la position des boutons disposés sur la lance, permettant de modifier le nombre de tuyères fermées.

La fermeture ou l'ouverture de tout ou partie des tuyères peut être réalisée par la manipulation d'une commande située sur le dessus de la lance, de préférence au niveau de son manche. Cette commande est avantageusement constituée par un bouton-interrupteur pouvant prendre trois positions possibles correspondant à des modulations de l'intensité du nettoyage comme suit :
a/ « neutre », correspondant à un non enfoncement du bouton.
b/ « sale », correspondant à un enfoncement d'un côté de l'interrupteur.
c/ « très sale », correspondant à un enfoncement de l'autre côté que précédemment de l'interrupteur. Les indications « neutre » « sale », « très sale » peuvent être inscrites sur le bouton.

Cette commande de modulation de l'intensité du nettoyage vient compléter la commande du type de nettoyage asservie aux différentes positions de l'embout coulissant de la lance comme décrites ci-dessus.

Différentes commandes de nettoyage peuvent alors être réalisées, notamment comme suit :
1/ Lorsque l'embout est en position « en avant », avec un mode de nettoyage de l'intérieur, la position « sale » du bouton détermine l'ouverture de la totalité des tuyères,
2/ Lorsque l'embout est en position « en avant », avec un mode de nettoyage de l'intérieur, la position « très sale » détermine l'ouverture d'une partie seulement des tuyères,
3/ Lorsque l'embout est en position « en arrière », avec un mode de nettoyage de extérieur, la position « sale » détermine l'ouverture d'une partie encore moindre des tuyères,
4/ Lorsque l'embout est en position « en arrière », avec un mode de nettoyage extérieur, la position « très sale » détermine l'ouverture d'une partie encore moindre des tuyères que celle de la configuration 3/.

Ainsi, la pression de la vapeur est modulée, à la fois selon le mode d'utilisation (intérieur ou extérieur) et la caractéristique choisie (sale ou très sale), le tout par la simple manipulation d'un bouton-interrupteur, en combinaison avec la position de l'embout coulissant de la lance. Pour rappel, on peut prévoir un message par synthèse vocale qui indique à l'utilisateur le mode de nettoyage choisi et la caractéristique choisie (sale ou très sale), à intervalles de temps réguliers par exemple toutes les minutes, avantageusement en alternance avec l'indication du temps déjà consommé.

Selon une variante de réalisation avantageuse, les moyens de modification du diamètre interne du deuxième tuyau peuvent être des lames métalliques fixées par une de leurs extrémités à l'intérieur du tuyau, le coulissement de l'embout de buse vers sa position extrême rapprochée modifiant l'inclinaison des lames métalliques par rapport à l'axe du tuyau externe par appui de l'embout contre ces dernières.

L'invention se rapporte également à un procédé de fonctionnement d'une installation de nettoyage de véhicules décrite ci-dessus en vue d'un nettoyage de l'extérieur d'un véhicule, comportant les étapes suivantes :
a/ mise en marche du premier générateur de vapeur,
b/ projection de la vapeur générée par le premier générateur sur la surface extérieure du véhicule, et simultanément soufflage d'air parallèlement et à distance de la vapeur projetée.

L'invention se rapporte également à un procédé de fonctionnement d'une installation de nettoyage de véhicules décrite ci-dessus en vue d'un nettoyage, désinfection et assainissement de l'intérieur d'un véhicule, comportant les étapes suivantes :
a1/ mise en marche du premier générateur de vapeur,
b1/ projection de la vapeur générée par le premier générateur sur la surface intérieure du véhicule, et simultanément aspiration de l'air et des poussières parallèlement et à distance de la vapeur projetée.

Selon une variante avantageuse, après l'étape b/ ou b1/, les étapes suivantes peuvent être réalisées:
c/ mise en marche du deuxième générateur de vapeur,
d/ projection de la vapeur générée par le deuxième générateur sur la surface intérieure du véhicule, et simultanément aspiration de l'air et des poussières ou soufflage d'air parallèlement et à distance de la vapeur projetée.

Au préalable de ces étapes proprement dites du procédé selon l'invention, un utilisateur qui souhaite procéder au nettoyage de son véhicule procède de la manière suivante :
- arrêt du véhicule à l'emplacement de nettoyage prévu dans l'installation,
- incorporation d'une carte de paiement dans une borne prévue à cet effet, du type parking, composition du N° de carte, ou validation d'enregistrement de la carte, s'il s'agit d'une carte de fidélité ou abonnement, retrait de la carte,
- décrochage de la lance de son support du type de celui utilisé dans les pompes à essence, ce décrochage provoquant le décompte du temps, de façon immédiate, ou avec un laps de temps permettant à l'utilisateur de se mettre dans la position de nettoyage choisie.
- approche de la lance près ou dans le véhicule,
- pression sur la poignée d'actionnement sur la lance, puis mise en position de l'embout coulissant en position « en arrière », relâchement du bouton ayant servi à atteindre cette position, mise en position du bouton-interrupteur de la lance sur « sale » ou « très sale », et démarrage du nettoyage.

### Description détaillée

D'autres avantages et caractéristiques de l'invention ressortiront mieux à la lecture de la description détaillée de l'invention faite à titre illustratif et non limitatif en référence aux figures suivantes parmi lesquelles :
- la figure 1 illustre un schéma fonctionnel d'une installation de nettoyage à la vapeur selon un mode de réalisation de l'invention,
- la figure 2 illustre plus en détail de la partie d'une installation selon l'invention intégrant deux générateurs de vapeur et un dispositif de soufflage pouvant fonctionner en mode inverse en un aspirateur,
- la figure 3 illustre plus en détail la partie d'une installation dédiée à l'alimentation électrique par énergies renouvelables,
- la figure 4 représente un schématiquement un dispositif de collecte d'eau de pluie selon un mode de réalisation de l'invention,
- la figure 5 illustre une lance de nettoyage selon un mode de réalisation destinée à être utilisée dans une installation de nettoyage selon l'invention,
- les figures 6A et 6B illustrent deux positions extrêmes prises par un embout de buse d'une lance selon l'invention, dont respectivement une position correspondant à un mode d'aspiration de la lance et une position correspondant à un mode de soufflage de la lance,
- les figures 7 et 7A sont des vues en coupe longitudinale et de face de l'extrémité de sortie de la vapeur de la lance selon une variante permettant de modules la pression de la vapeur projetée,
- la figure 8 illustre une lance de nettoyage selon une autre variante de réalisation,
- les figures 9 et 9A sont des vues respectivement de côté et de face d'une lance de nettoyage, selon encore un mode de réalisation, également destinée à être utilisée dans une installation de nettoyage selon l'invention ;
- la figure 9B illustre une configuration de la lance selon la figure 9, selon laquelle la buse d'éjection de vapeur est avancée par rapport à la buse d'aspiration/soufflage d'air, ce qui correspond à un mode de nettoyage extérieur d'un véhicule ;
- les figures 9C et 9D sont des vues de face de la lance selon la figure 9, illustrant deux inclinaisons différentes de la partie avant de la lance par rapport au corps de la lance.

Dans l'ensemble de la présente demande, les termes « entrée », « sortie » « aval » et « amont » sont à comprendre en référence au sens de circulation des fluides (eau, vapeur, air, ou air chargé de poussières) au sein d'une installation selon l'invention.

Les éléments représentés ne sont pas nécessairement à l'échelle.

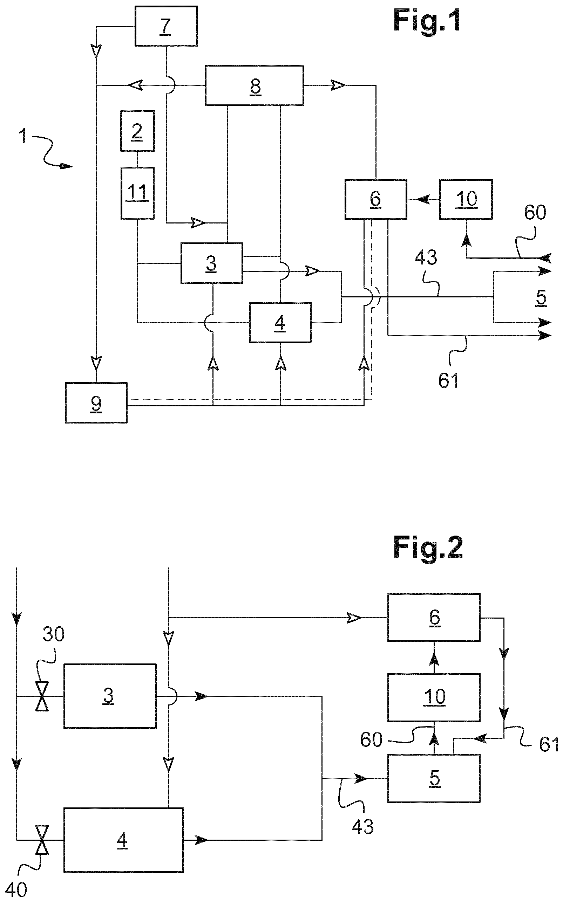

Sur les figures 1 et 2, les flèches pleines indiquent le sens de circulation de fluides tandis que les flèches vides indiquent le sens d'alimentation en électricité.

On a représenté en figure 1 le schéma fonctionnel d'une installation 1 de nettoyage de véhicules à la vapeur selon un mode de réalisation de l'invention.

L'installation de nettoyage 1 comporte une source d'alimentation en eau 2 pouvant alimenter en continu deux générateurs de vapeur 3, 4. Le premier générateur de vapeur 3 présente une chaudière de capacité inférieure à celle du deuxième générateur 4.

L'un ou l'autre des générateurs de vapeur 3, 4 est relié en aval à une lance de nettoyage 5 détaillée par la suite.

L'installation comporte également un unique dispositif de soufflage 6 qui est réversible et qui en mode inverse est utilisé comme aspirateur, ce dispositif 6 étant relié en aval à la lance 5.

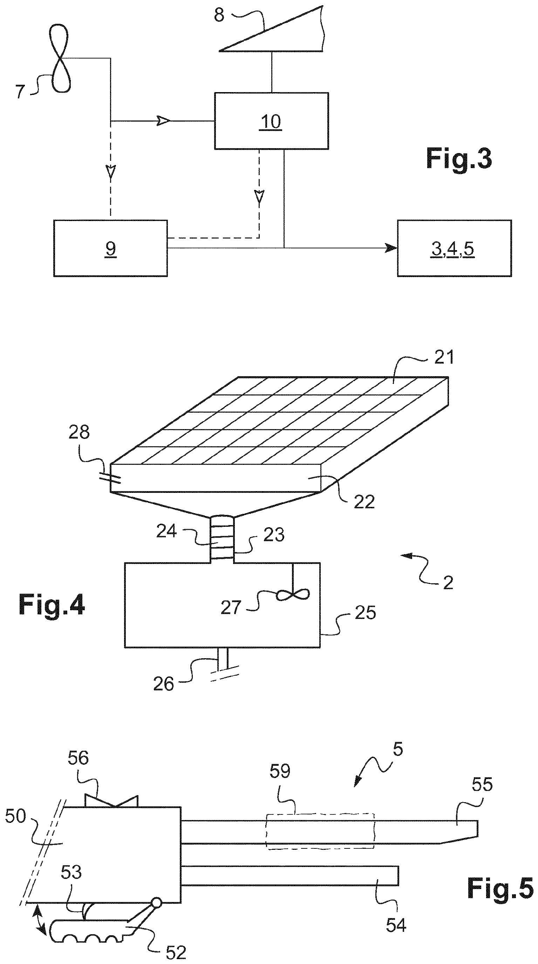

La source d'alimentation en eau est avantageusement une source de collecte et de stockage d'eau pluviale comme celle représentée en figure 4 qui sera également détaillée par la suite.

L'installation de nettoyage comprend également plusieurs sources d'énergies renouvelables qui peuvent rendre complètement autonome en électricité l'installation.

Tel qu'illustré en figure 1, ces sources peuvent consister en une éolienne 7 et des panneaux photovoltaïques 8 qui alimentent directement les générateurs de vapeur 3, 4 et le dispositif de soufflage ou d'aspiration 6.

Tel qu'illustré en figure 1, l'installation peut comprendre une batterie 9 qui peut stocker de l'électricité générée par l'éolienne 7 ou les panneaux photovoltaïques 8 pour une utilisation future. La batterie peut, en cas de besoin, être branchée sur le réseau électrique de distribution local.

Selon l'invention, le fonctionnement du dispositif d'aspiration ou de soufflage est asservi au fonctionnement des générateurs de vapeur de sorte à pouvoir générer un soufflage d'air ou une aspiration en sortie du tuyau de lance auquel il est relié simultanément à et à distance de la projection de vapeur en sortie du tuyau de lance relié aux générateurs de vapeur 3,4.

Ainsi, lorsque lorsqu'un utilisateur commande un nettoyage, les générateurs de vapeur 3, 4 envoient de la vapeur 43 et simultanément et à distance du jet de vapeur, le dispositif 6 aspire de l'air chargé le cas échéant de poussières 60 depuis la lance 5 ou souffle de l'air 61 en direction de la lance 5.

Comme illustré en figure 1, l'installation comporte de préférence un bac à poussières 10 pour prélever les poussières aspirées en amont de l'aspirateur 6. Un capteur solaire thermique 11 en aval de la source d'alimentation en eau permet de préchauffer l'eau avant son entrée dans les générateurs de vapeur 3, 4.

Avec l'installation de nettoyage selon l'invention, un utilisateur peut par exemple utiliser en combinaison un soufflage et une projection de vapeur pour nettoyer l'extérieur de son véhicule et en combinaison une aspiration et la projection de vapeur pour nettoyer l'intérieur de son véhicule.

On a représenté en figure 2 la partie aval de l'installation de nettoyage selon l'invention. Les générateurs de vapeur3, 4 sont chacun munis d'une électrovanne 30, 40 afin de contrôler le niveau d'eau alimentant leurs chaudières respectives.

On peut prévoir avantageusement d'équiper en outre les générateurs de vapeur 3, 4 d'un témoin de pression et de température et d'un témoin de niveau d'eau et de vapeur. Les informations de niveau d'eau, de pression et de température des deux générateurs de vapeur peuvent être sont transmises à une unité électronique de contrôle-commande non représentée. Cette unité contrôle ainsi la température et la pression des chaudières des générateurs de vapeur 3, 4 et leur niveau de remplissage via la commande des électrovannes 30, 40.

La figure 3 illustre un mode de réalisation de la partie amont de l'installation, i.e. la partie de génération et d'alimentation en électricité. L'éolienne 7 et les panneaux photovoltaïques 8 génèrent et transmettent un courant continu vers un onduleur/redresseur 12. Le courant alternatif sortant peut alors alimenter les générateurs de vapeur 3, 4 et le dispositif d'aspiration ou de soufflage 6. Le courant alternatif en sortie d'onduleur 12 peut alimenter également la batterie 9 en vue de son stockage.

Le cas échéant, l'éolienne 7 et les panneaux photovoltaïques 8 peuvent également alimenter directement la batterie 9 si l'électricité produite localement est supérieure aux besoins en électricité de l'installation de nettoyage.

En revanche, si les besoins en électricité à un instant donné sont supérieurs à la production de l'éolienne 7 et des panneaux photovoltaïques 8, la batterie 9 est alors utilisée et alimente en électricité les générateurs 3, 4 et le dispositif 6.

La batterie 9 peut être dimensionnée pour fournir assez d'électricité pour toute l'installation de nettoyage.

On a représenté en figure 4 une variante avantageuse de source d'alimentation en eau qui est un dispositif de collecte et de stockage d'eau de pluie.

Ce dispositif 2 comporte un bac de collecte d'eau de pluie 22 sur lequel est fixée une grille de filtration et de protection 21. Le bac 22 comporte également un trop-plein (non représenté en figure 4) pour éviter un éventuel excédent d'eau de pluie. Le bac 22 comporte en outre un fond terminé par un tube d'écoulement 23 dans lequel des filtres antibactériens 24 sont fixés. Le tube d'écoulement 23 relie le bac 22 à un réservoir de stockage 25 de l'eau de pluie collectée.

Le réservoir de stockage 25 est agencé en dessous du bac de collecte 22. L'eau s'écoule ainsi par gravité à travers le tube d'écoulement 23. On prévoit en outre que l'écoulement entre le réservoir de stockage 25 et les générateurs de vapeur 3, 4 se fasse par gravité par l'intermédiaire d'un tuyau 26 prévu à cet effet.

Le réservoir de stockage 25 peut comporter en outre une pale de brassage 27 dont la rotation permet d'éviter tout risque de gel de l'eau collectée. La rotation de la pale de brassage 27 peut être réalisée au moyen d'un moteur non représenté dont l'alimentation électrique peut être faite par l'éolienne 7, les panneaux photovoltaïques 8 par l'intermédiaire de l'onduleur 12 ou directement par la batterie 9.

On a représenté en figure 5 une lance de nettoyage 5 selon un mode de réalisation de l'invention.

La lance 5 comporte tout d'abord un manche 50 et sur lequel est une poignée 52 est montée pivotante entre une position de marche dans laquelle elle actionne un nettoyage et une position d'arrêt dans laquelle elle interrompt tout nettoyage. Ainsi un appui manuel sur la poignée 52 enfonce la gâchette 53 et active simultanément les générateurs de vapeur 3, 4 et le dispositif de soufflage ou d'aspiration 6. La poignée 52 peut être pourvue d'éléments aidant à la prise en main tels que des reliefs épousant la forme de la main.

La lance 5 comporte un premier tube 54 de projection de vapeur relié directement à chacun des générateurs de vapeur 3, 4 et un deuxième tube 55 relié au dispositif d'aspiration ou de soufflage 6 et donc au sein duquel l'air aspiré ou soufflé peut circuler. La vapeur sortant de la buse d'éjection en bout de tube 54 peut être projetée sur une surface intérieure ou extérieure d'un véhicule à nettoyer.

Le tube 55 se termine par un embout de buse 59 montée coulissant autour du tube 55 entre une position extrême rapprochée dans laquelle il est rentrée à l'intérieur du tuyau et une position extrême éloignée dans laquelle il fait saillie.

La position extrême éloignée correspond à un mode d'aspiration de la lance, et la position extrême rapprochée correspond à un mode de soufflage de la lance 5.

Le coulissement de l'une à l'autre provoque l'actionnement de moyens de modification du diamètre interne du tube 55 détaillés ci-après, afin d'augmenter la pression de soufflage par rapport à la pression d'aspiration. Ainsi, on peut utiliser un seul et même tube 55 de lance 5 avec un seul et même dispositif 6 pour le soufflage d'air et en mode de fonctionnement inverse pour l'aspiration d'air et des poussières.

L'air soufflé depuis la buse 59 est dirigé vers une surface intérieure ou extérieure du véhicule à nettoyer.

L'air aspiré chargé en poussières d'une surface intérieure ou extérieure du véhicule à nettoyer.

La lance 5 selon l'invention est facile d'emploi, puisqu'elle permet à la fois de souffler et d'aspirer de l'air, et de projeter de la vapeur sans changer d'appareil. Le tube de sortie de vapeur peut être équipé eu niveau de la buse d'éjection d'un boudin de protection afin de protéger les surfaces extérieures des véhicules à nettoyer des éventuels contacts avec la lance 5 résultant d'une mauvaise manipulation.

L'embout de buse 59 peut être conformé en une poignée coulissante autour du tube 55 selon trois positions décrites ci-après. Cette poignée coulissante constitue une commande de la pression interne de la chaudière du premier générateur de vapeur 3 et de celle du générateur de vapeur 4.

La première position est la position extrême déployée de l'embout et correspond à une position dite de nettoyage « extérieur » : le dispositif 6 souffle de l'air et les générateurs de vapeur 3 et 44 transmettent de la vapeur vers la lance 5, qui sort par l'orifice de sortie du tube 54. La pression et la température des chaudières des générateurs 3,4 sont réglées à des valeurs prédéterminées pour cette position de nettoyage « extérieur ». Selon un mode de réalisation, la pression pour la position « extérieur » est de 8 bars et la température est de 180°C.

La deuxième position est une position dite neutre. Cette position neutre est une position selon laquelle le dispositif 6 est à l'arrêt et selon laquelle de la vapeur de sort pas de l'orifice de sortie du tube 54.

La troisième position est la position extrême rapprochée de l'embout et correspond à une position dite de nettoyage « intérieur » : la turbine aspire de l'air et les générateurs de vapeur 3 et 4 transmettent de la vapeur vers la lance 5, qui sort par l'orifice de sortie du tube 54. La pression et la température des chaudières des générateurs 3,4 sont réglées à des valeurs prédéterminées pour cette position de nettoyage « intérieur ». Selon un mode de réalisation, la pression pour la position « intérieur » est de 6 bars et la température est de 165°C.

Ainsi, la position de nettoyage « extérieur » permet à la fois de projeter de la vapeur à plus haute pression et à plus haute température et de souffler de l'air. Cette combinaison est adaptée pour nettoyer les surfaces extérieures de véhicules, notamment la carrosserie et les fenêtres.

La position de nettoyage « intérieur » permet à la fois de projeter de la vapeur à plus basse pression et à plus basse température et d'aspirer de l'air chargé de poussières. Cette combinaison est adaptée pour nettoyer les surfaces intérieures de véhicules, notamment l'habitacle et le coffre.

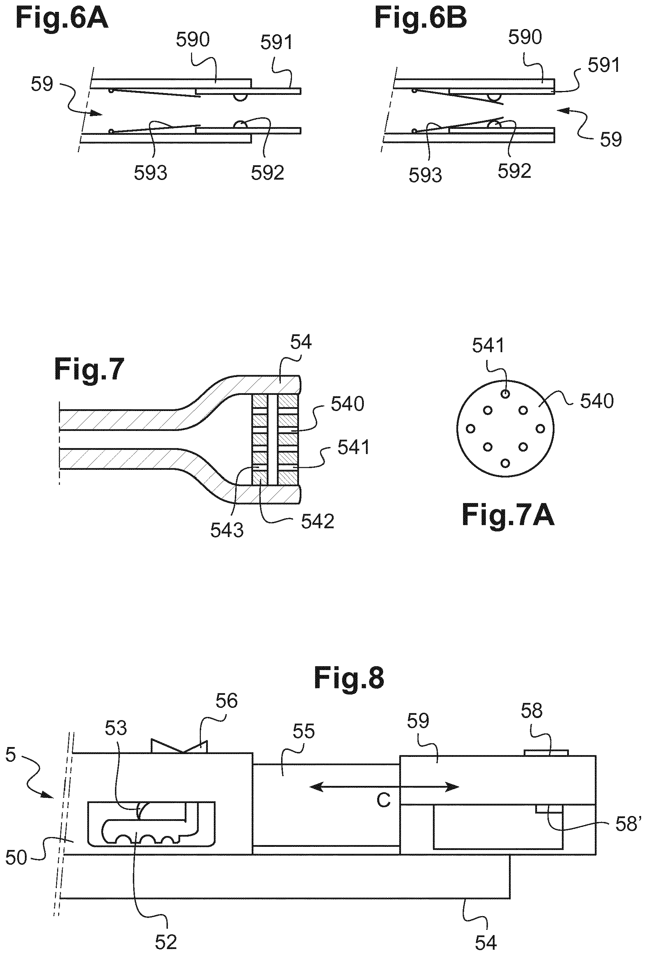

On a représenté en figures 6A et 6B les deux positions extrêmes de l'intérieur de l'embout de buse 59 tube d'aspiration ou de soufflage d'air 55. Ce tube 55 est constitué d'une partie fixe 590 qui est l'extrémité du tube 55 dans lequel peut coulisser un tube interne 591. La partie fixe 590 comporte sur sa surface intérieure des protubérances 592.

Des lames métalliques 593 sont agencées sur la paroi intérieure de la partie fixe externe 590. Le coulissement du tube interne 591 dans la partie fixe externe 590 modifie l'inclinaison des lames métalliques 593 et ainsi modifie le diamètre interne du tube 55, ce qui permet de diminuer ou d'augmenter la pression de l'air soufflé ou de l'air aspiré. Dans la position extrême éloignée de l'embout 59, le tube interne 591 fait saillie de la partie fixe 590 du tube 55.

Dans la position extrême déployée de l'embout conformé en poignée 59, l'extrémité du tube 591 se situe au-delà de l'orifice de sortie de vapeur en direction de la surface à nettoyer par la lance 5 (figure 6A). Dans cette position, l'écart longitudinal le long des tubes 54, 55 entre l'extrémité 591 et l'orifice de sortie de la vapeur peut-être de quelques cm, typiquement entre 1 et 10 cm, de préférence entre 3 et 10 cm. Dans cette position également, le diamètre interne du tube 55 n'est pas réduit par les lamelles 593. L'aspiration de l'air peut avoir lieu.

Dans la position extrême repliée de l'embout conformé en poignée 59, l'extrémité du tube interne 591 est sensiblement au niveau de l'extrémité de la partie fixe 590 (figure 6B). Dans cette position, l'extrémité de la partie fixe 590 est sensiblement proche de l'orifice de sortie de vapeur.

De préférence, l'écart transversal séparant le tube 55 et le tube 54 est de l'ordre de quelques cm, typiquement de l'ordre de 10 cm.

Un bouton de modulation 56 est agencé sur le dessus de la manche 50 de la lance 5. Ce bouton de modulation 56 peut adopter trois positions, dont une première position dite neutre, une deuxième dite « sale », et une troisième dite « très sale ».

Le tube de sortie de vapeur 54 comporte en son sein une pluralité de tuyères, par exemple au nombre de sept, qui peuvent être fermées en tout ou partie. Les tuyères sont, selon un mode de réalisation, des trous répartis sur la largeur Ces tuyères peuvent chacune adopter une position fermée grâce à des clapets disposés sur un cercle à glissières coulissantes. Ces clapets peuvent chacun obturer un trou. Les clapets sont asservis selon la position à la fois de la poignée coulissante 59 (position de lavage extérieur ou intérieur) et du bouton de modulation 56 (position sale ou très sale).

En figures 7 et 7A, on a illustré une variante de réalisation de la fermeture des tuyères. Un disque fixe 540 percé de tuyères 541 est monté à l'extrémité du tuyau 54. Immédiatement en amont, un disque 542 est monté rotatif à l'intérieur du tuyau 54, ce disque étant percé également de tuyères 543 du même nombre que les tuyères 541. La rotation du disque 542 est commandée par l'actionnement du bouton de modulation 56. Ainsi, cette rotation provoque la mise en regard ou non des tuyères 543 avec les tuyères 541 et donc la fermeture partielle ou totale de ces dernières.

Le tableau 1 suivant indique un exemple de nombre de tuyères en position ouverte pour chaque combinaison de positions de la poignée coulissante 59 et du bouton de modulation 56.

**TABLEAU 1**

| poignée\ bouton | Neutre | Sale | Très Sale |
|---|---|---|---|
| Intérieur | 0 | 7 | 5 |
| Extérieur | 0 | 3 | 2 |
| Neutre | 0 | 0 | 0 |

Le changement de la position du bouton « sale » à la position « très sale » réduit le nombre de tuyères en position ouverte.

De plus, en position très sale, la pression d'air soufflé ou aspiré peut être augmentée. La température de la vapeur peut également être augmentée.

Le tableau 2 suivant décrit des exemples de températures et de pression de vapeur (T, Pvap) et des exemples de pression d'air soufflé ou aspiré (Pair) selon un mode de réalisation.

**TABLEAU 2**

| poignée\ bouton | Neutre | Sale | Très Sale |
|---|---|---|---|
| Intérieur | / | T° = 160°C | T° = 165°C |
| | | Pvap = 6bars | P vap= 6,5bars |
| | | Pair = 2bars | Pair = 2,5bars |
| Extérieur | / | T° = 180°C | T° = 185°C |
| | | P = 8bars | P = 8,5bars |
| | | p = 2bars | p = 2,5bars |
| Neutre | / | / | / |

La lance 5 peut comporter en outre deux boutons 58 d'arrêt temporaire de la vapeur et du soufflage/aspiration de l'air. Ces deux boutons 58 permettent respectivement d'arrêter temporairement la sortie de vapeur, ou celle du dispositif 6 et ainsi l'aspiration ou le soufflage.

Lorsque le bouton de modulation 56 et/ou la poignée coulissante 59 sont en position « neutre », les générateurs de vapeurs 3, 4 peuvent être mis en attente. Durant leur mise en attente, la pression et la température des chaudières des générateurs de vapeur 3, 4 est choisie de telle sorte à permettre une reprise rapide du nettoyage.

On peut voir en figure 8 un mode de réalisation de la lance 5. Selon ce mode de réalisation, la poignée 52 et la gâchette 57 sont logées à l'intérieur de la manche 50.

La poignée avant 57 et la poignée coulissante 59 constituent un seul et même élément. Un bouton 58' de libération/blocage de la poignée 59 sur le tube 55 est agencé.

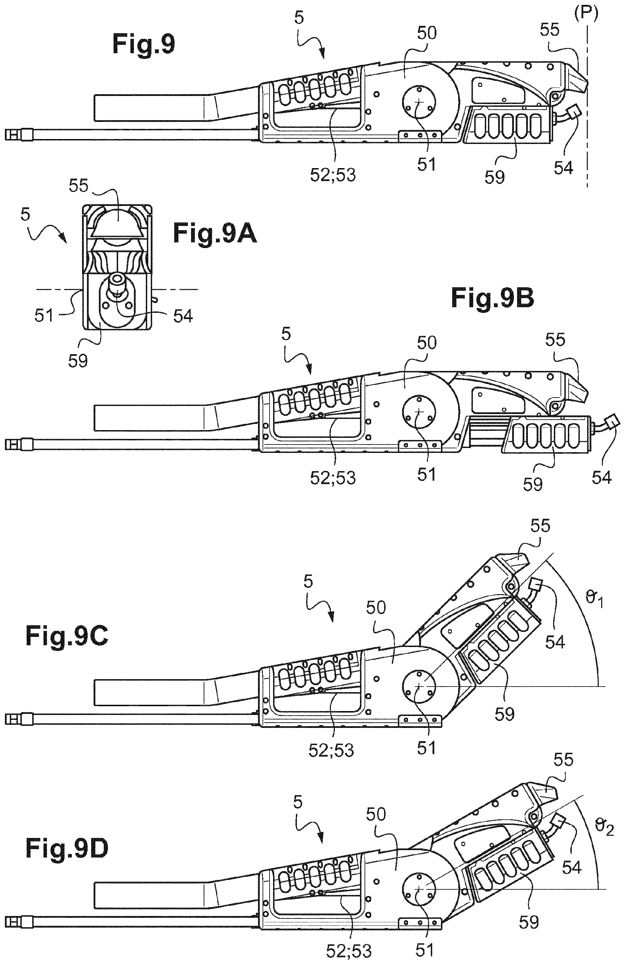

On a représenté en figures 9 à 9D un autre mode de réalisation de la lance selon l'invention, qui fait l'objet d'un prototype.

Dans ce mode de réalisation, contrairement à celui de la figure 8, la buse d'éjection de vapeur 59 est montée coulissante entre une position extrême rapprochée (figure 9) et une position extrême déployée (figure 9B), et la buse d'aspiration/soufflage d'air est fixe.

Dans la position extrême rapprochée, on peut voir que l'extrémité d'éjection de la vapeur 54 est sensiblement dans le même plan P que l'extrémité d'aspiration/soufflage d'air 55. Cette position peut correspondre à un nettoyage intérieur d'un véhicule qui permet à la fois de projeter de la vapeur à plus basse pression et à plus basse température et d'aspirer de l'air chargé de poussières.

Dans la position extrême déployée, l'extrémité d'éjection de la vapeur 54 est avancée par rapport à celle d'air 55. Cette position peut correspondre à un nettoyage extérieur de véhicule qui permet à la fois de projeter de la vapeur à plus haute pression et à plus haute température et de souffler de l'air. Cela permet avantageusement de nettoyer les surfaces extérieures de véhicules, notamment la carrosserie et les fenêtres.

Dans ce mode de réalisation avantageux, la partie avant de la lance 5, i.e. supportant les buses de sortie de vapeur et d'air, est montée pivotante par rapport au reste du corps 50 de la lance 5 autour d'un axe 51.

Ainsi comme on peut le voir ce pivotement peut prendre plusieurs positions, typiquement une valeur θ1 égale à environ 45° entre la partie avant et le corps 50 (figure 9C) ou une valeur θ2 égale à environ 30° (figure 9D).

Ce pivotement possible peut ainsi permettre une meilleure manœuvrabilité de la lance et une meilleure accessibilité des zones d'un véhicule ou de tout objet difficiles d'accès pour leur nettoyage. Cela peut par exemple concerner les passages de roue d'un véhicule automobile.

### Exemple de réalisation

L'inventeur a dimensionné une installation selon l'invention susceptible d'être complètement autonome en énergie et en eau.

La surface des panneaux photovoltaïques est comprise entre 32 et 42m². La surface des panneaux photovoltaïques 8 est décidée en fonction de l'ensoleillement de la région dans laquelle l'installation est située. Les panneaux font un angle de 30° avec le sol et sont orientés plein sud.

La surface des pales de l'éolienne 7 est de 1.2m², surface minimum pour un vent de 2m/s.

La batterie 9 est une batterie lithium-ion de 0.1m³, soit une longueur de 0.58m, une longueur de 0.22m et une hauteur de 0.82 m. Le poids de cette batterie est d'environ 200kg.

La pale de brassage 27 tourne à une vitesse de rotation allant jusque 10cm/s.

Le dessus du réservoir de stockage 25 est protégé par trois grilles 21 de granulométrie fine et en diminution vers le bas, afin de filtrer les poussières et de protéger des vandalismes. Un clapet est disposé en fin de ces grilles, avec une légère pente centrale sur une plaque de fermeture en inox, afin de préserver au mieux la température intérieure, notamment en cas de gel.

L'installation met en œuvre deux générateurs de vapeur 3,4 afin de réduire au minimum le temps d'attente d'un client. Le temps d'attente est le temps qu'il faut à la vapeur pour qu'elle atteigne une température et une pression prédéterminées.

Lors d'une commande d'un client, une fois le paiement effectué et enregistré, les deux générateurs déclenchent leurs chaudières.

Le générateur de vapeur 3 est sollicité en priorité. Il possède, entre autres, une chaudière de plus petite capacité que le générateur de vapeur 4 avec une forte résistance élaborée en forme de « double chauffe » ; la montée en température et en pression du générateur 3 se fait en 1 minute. A ce stade, l'utilisation de la lance 5 est possible, le nettoyage peut commencer.

Dès que la vapeur dans le deuxième générateur 4, parvient une température et à une pression prédéterminées, le générateur 3 passe le relai au générateur 4. Les températures et pressions sont modifiées par le choix de la position « sale » ou « très sale » dans chaque mode de nettoyage choisi.

Les caractéristiques du premier générateur 3 et du second générateur 4 sont détaillées dans le tableau 3 ci-après.

**TABLEAU 3**

| | Premier générateur 3 | Deuxième générateur 4 |
|---|---|---|
| Alimentation | 230 V Monophasé | 230 V Monophasé |
| Puissance | 2.6 kW | 3.5 kW |
| Quantité de vapeur produite | 7 kg/h | 8 kg/h |
| Pression délivrée | 6 à 8 bars | 6 à 8 bars |
| Température | 160 à 185 °C | 160 à 185 °C |
| Nombre de sorties | 2 | 2 |
| Consommation d'eau | 4 L/h | 6 L/h |
| Métal de la cuve de la chaudière | Acier Inox | Acier Inox |
| Réserve tampon | 1 L | 6 L |

Les caractéristiques du dispositif de soufflage ou d'aspiration sont détaillées dans le tableau 4 ci-après.

**TABLEAU 4**

| | Turbine |
|---|---|
| Alimentation | 220 V monophasé |
| Puissance | 1.2 kW |
| Débit d'air | 403 m3/h |
| Dépression | 235 mbar |
| Cuve | Acier inox |
| Capacité | 200 L |

D'autres caractéristiques peuvent également être envisagées en fonction de l'ensoleillement de l'endroit où est installée l'installation de nettoyage, du nombre de clients par jour, et de la qualité du nettoyage souhaité.

Le paiement d'un certain montant par un utilisateur est réalisé de préférence au temps passé. La commande et paiement peuvent s'effectuer sur un écran interactif de l'installation, par exemple un panneau muni d'un écran tactile. Le paiement peut être effectué par carte bancaire, carte d'abonnement, espèces ou tout autre moyen de paiement adapté à ce type d'installation.

L'installation peut comporter un écran permettant de visionner une vidéo de démonstration avec choix de la séquence désirée. Le choix de la séquence de la vidéo peut s'effectuer sur l'écran interactif.

Des voix d'informations et d'alerte peuvent être intégrées à l'installation afin d'avertir l'utilisateur du temps de service restant où d'un problème technique.

Les différents éléments de l'installation, à savoir les panneaux photovoltaïques, la lance, les générateurs de vapeur et le dispositif d'aspiration ou de soufflage, peuvent chacun comporter un élément de sécurité antivol. Cet élément de sécurité antivol peut notamment être un identifiant chimique dit « tag chimique » tel que ceux commercialisés par la société Naxagoras Technology.

Au moins les générateurs de vapeur peuvent être contenus dans un habillage en bois brut de classe de risque 4 selon la norme NF EN 335-2. Ils peuvent en outre être isolés de l'extérieur par une épaisseur de laine de bois hydrofuge, par exemple une épaisseur de 200 mm.

L'invention n'est pas limitée aux exemples qui viennent d'être décrits ; on peut notamment combiner entre elles des caractéristiques des exemples illustrés au sein de variantes non illustrées.

## Revendications

1. Installation de nettoyage (1) de véhicules, comportant au moins:
- une source d'alimentation en eau (2) ;
- un premier générateur de vapeur (3) relié en amont à la source d'alimentation en eau, **caractérisée en ce qu'**elle comporte en plus :
- un dispositif d'aspiration ou de soufflage (6) adapté pour réaliser un soufflage d'air et une aspiration en mode de fonctionnement inverse à celui du soufflage ;
- une lance de nettoyage (5) comportant :
• un premier tuyau (43, 54) relié au premier générateur de vapeur,
• un deuxième tuyau (60, 61, 55) agencé sensiblement parallèle au premier tuyau et relié au dispositif d'aspiration ou de soufflage,
installation dans laquelle le fonctionnement du dispositif d'aspiration ou de soufflage est asservi au fonctionnement du premier générateur de vapeur de sorte à pouvoir générer un soufflage d'air ou une aspiration en sortie du deuxième tuyau simultanément à et à distance de la projection de vapeur en sortie du premier tuyau.

2. Installation de nettoyage (1) de véhicules selon la revendication 1, comportant un deuxième générateur de vapeur (4) distinct du premier générateur de vapeur et relié également à la source d'alimentation en eau, le deuxième générateur de vapeur (4) étant également relié au premier tuyau de la lance, le premier générateur de vapeur comportant une chaudière de capacité inférieure à celle du deuxième générateur de vapeur.

3. Installation de nettoyage de véhicules selon la revendication 2, le premier générateur de vapeur étant adapté pour générer de la vapeur en un temps plus court que le deuxième générateur.

4. Installation de nettoyage de véhicules selon l'une des revendications précédentes, comportant au moins un panneau photovoltaïque (8) relié au premier générateur et/ou au dispositif d'aspiration ou soufflage et le cas échéant au deuxième générateur de vapeur pour l' (les) alimenter en électricité.

5. Installation de nettoyage de véhicules selon l'une des revendications précédentes, comportant au moins une éolienne (7) reliée au premier générateur et/ou au dispositif d'aspiration ou soufflage et le cas échéant au deuxième générateur de vapeur pour l'(les) alimenter en électricité.

6. Installation de nettoyage de véhicules selon la revendication4 ou 5, comportant au moins une batterie (9) reliée au(x) panneau(x) photovoltaïque(s) et/ou à l'éolienne pour stocker l'électricité produite, la batterie étant en outre reliée au premier générateur et/ou au dispositif d'aspiration ou soufflage et le cas échéant au deuxième générateur de vapeur pour l'(les) alimenter en électricité.

7. Installation de nettoyage de véhicules selon l'une des revendications précédentes, la source d'alimentation en eau (2) comportant :
- un dispositif de collecte d'eau de pluie (22) et un réservoir de stockage (25) relié au dispositif de collecte, le réservoir étant relié au premier générateur de vapeur, et le cas échéant au deuxième générateur de vapeur,
- de préférence des moyens d'agitation de l'eau collectée et stockée, agencés dans le réservoir de stockage, le réservoir de stockage étant de préférence agencé relativement au premier générateur de vapeur et le cas échéant au deuxième générateur de vapeur pour l'(les) alimenter en eau de pluie par écoulement gravitaire.

8. Installation de nettoyage selon l'une des revendications précédentes, comportant un récepteur solaire (11) relié en aval à la source d'alimentation en eau pour réchauffer l'eau préalablement à son entrée dans le premier générateur de vapeur et le cas échéant dans le deuxième générateur de vapeur.

9. Installation de nettoyage selon l'une des revendications précédentes, comportant un bac de récupération (10) des poussières aspirées relié en amont au deuxième tuyau et en aval au dispositif d'aspiration.

10. Procédé de fonctionnement d'une installation de nettoyage de véhicules selon l'une des revendications 1 à 9 en vue d'un nettoyage de l'extérieur d'un véhicule, comportant les étapes suivantes :
a/ mise en marche du premier générateur de vapeur,
b/ projection de la vapeur générée par le premier générateur sur la surface extérieure du véhicule, et simultanément soufflage d'air parallèlement et à distance de la vapeur projetée.

11. Procédé de fonctionnement d'une installation de nettoyage de véhicules selon l'une des revendications 1 à 9 en vue d'un nettoyage, désinfection et assainissement de l'intérieur d'un véhicule, comportant les étapes suivantes :
a1/ mise en marche du premier générateur de vapeur,
b1/ projection de la vapeur générée par le premier générateur sur la surface intérieure du véhicule, et simultanément aspiration de l'air et des poussières parallèlement et à distance de la vapeur projetée.

12. Procédé de fonctionnement selon la revendication 10 ou 11 comportant après l'étape b/ ou b1/, les étapes suivantes:
c/ mise en marche du deuxième générateur de vapeur,
d/ projection de la vapeur générée par le deuxième générateur sur la surface intérieure du véhicule, et simultanément aspiration de l'air et des poussières ou soufflage d'air parallèlement et à distance de la vapeur projetée.

## Patentansprüche

1. Anlage zur Reinigung (1) von Fahrzeugen, welche wenigstens aufweist:
- eine Wasserversorgungsquelle (2);
- einen ersten Dampferzeuger (3), der stromaufwärts mit der Wasserversorgungsquelle verbunden ist,
**dadurch gekennzeichnet, dass** sie außerdem aufweist:
- eine Ansaug- oder Blasvorrichtung (6), die dafür ausgelegt ist, ein Blasen von Luft und ein Ansaugen in einer Betriebsart, die umgekehrt zu derjenigen des Blasens ist, durchzuführen;
- eine Reinigungslanze (5), welche aufweist:
• ein erstes Rohr (43, 54), das mit dem ersten Dampferzeuger verbunden ist,
• ein zweites Rohr (60, 61, 55), das im Wesentlichen parallel zu dem ersten Rohr angeordnet und mit der Ansaug- oder Blasvorrichtung verbunden ist,
wobei in dieser Anlage der Betrieb der Ansaug- oder Blasvorrichtung dem Betrieb des ersten Dampferzeugers nachgeführt wird, so dass ein Blasen von Luft oder ein Absaugen am Ausgang des zweiten Rohres gleichzeitig mit und in einem Abstand von dem Sprühen von Dampf am Ausgang des ersten Rohres erzeugt werden kann.

2. Anlage zur Reinigung (1) von Fahrzeugen nach Anspruch 1, welche einen zweiten Dampferzeuger (4) aufweist, der von dem ersten Dampferzeuger verschieden ist und ebenfalls mit der Wasserversorgungsquelle verbunden ist, wobei der zweite Dampferzeuger (4) ebenfalls mit dem ersten Rohr der Lanze verbunden ist, wobei der erste Dampferzeuger einen Kessel mit einer Kapazität aufweist, die niedriger als diejenige des zweiten Dampferzeugers ist.

3. Anlage zur Reinigung von Fahrzeugen nach Anspruch 2, wobei der erste Dampferzeuger dafür ausgelegt ist, Dampf in einer kürzeren Zeit als der zweite Dampferzeuger zu erzeugen.

4. Anlage zur Reinigung von Fahrzeugen nach einem der vorhergehenden Ansprüche, welche wenigstens ein Solarmodul (8) aufweist, das mit dem ersten Dampferzeuger und/oder mit der Ansaug- oder Blasvorrichtung und gegebenenfalls mit dem zweiten Dampferzeuger verbunden ist, um ihn (sie) mit Strom zu versorgen.

5. Anlage zur Reinigung von Fahrzeugen nach einem der vorhergehenden Ansprüche, welche wenigstens eine Windkraftanlage (7) aufweist, die mit dem ersten Dampferzeuger und/oder mit der Ansaug- oder Blasvorrichtung und gegebenenfalls mit dem zweiten Dampferzeuger verbunden ist, um ihn (sie) mit Strom zu versorgen.

6. Anlage zur Reinigung von Fahrzeugen nach Anspruch 4 oder 5, welche wenigstens eine Batterie (9) aufweist, die mit dem (den) Solarmodulen und/oder der Windkraftanlage verbunden ist, um die erzeugte elektrische Energie zu speichern, wobei die Batterie außerdem mit dem ersten Dampferzeuger und/oder mit der Ansaug- oder Blasvorrichtung und gegebenenfalls mit dem zweiten Dampferzeuger verbunden ist, um ihn (sie) mit Strom zu versorgen.

7. Anlage zur Reinigung von Fahrzeugen nach einem der vorhergehenden Ansprüche, wobei die Wasserversorgungsquelle (2) aufweist:
- eine Vorrichtung zur Regenwassergewinnung (22) und einen mit der Vorrichtung zur Regenwassergewinnung verbundenen Speicherbehälter (25), wobei der Behälter mit dem ersten Dampferzeuger und gegebenenfalls mit dem zweiten Dampferzeuger verbunden ist,
- vorzugsweise Mittel zum Rühren des gewonnenen und gespeicherten Wassers, die in dem Speicherbehälter angeordnet sind, wobei der Speicherbehälter vorzugsweise relativ zu dem ersten Dampferzeuger und gegebenenfalls zu dem zweiten Dampferzeuger so angeordnet ist, dass er ihn (sie) durch Schwerkraftfluss mit Regenwasser versorgen kann.

8. Reinigungsanlage nach einem der vorhergehenden Ansprüche, welche einen Solarempfänger (11) aufweist, der stromabwärts der Wasserversorgungsquelle angeschlossen ist, um das Wasser vor seinem Eintritt in den ersten Dampferzeuger und gegebenenfalls in den zweiten Dampferzeuger zu erwärmen.

9. Reinigungsanlage nach einem der vorhergehenden Ansprüche, welche einen Auffangbehälter (10) für den angesaugten Staub aufweist, der stromaufwärts des zweiten Rohres und stromabwärts der Ansaugvorrichtung angeschlossen ist.

10. Betriebsverfahren einer Anlage zur Reinigung von Fahrzeugen nach einem der Ansprüche 1 bis 9 im Hinblick auf eine Reinigung der Außenseite eines Fahrzeugs, welches die folgenden Schritte umfasst:
a/ Einschalten des ersten Dampferzeugers,
b/ Sprühen des von dem ersten Dampferzeuger erzeugten Dampfes auf die Außenfläche des Fahrzeugs, und gleichzeitig Blasen von Luft parallel zu und in einem Abstand von dem gesprühten Dampf.

11. Betriebsverfahren einer Anlage zur Reinigung von Fahrzeugen nach einem der Ansprüche 1 bis 9 im Hinblick auf eine Reinigung, Desinfektion und Aufbereitung des Inneren eines Fahrzeugs, welches die folgenden Schritte umfasst:
al/ Einschalten des ersten Dampferzeugers,
bl/ Sprühen des von dem ersten Dampferzeuger erzeugten Dampfes auf die Innenfläche des Fahrzeugs und gleichzeitig Ansaugen der Luft und des Staubes parallel zu und in einem Abstand von dem gesprühten Dampf.

12. Betriebsverfahren nach Anspruch 10 oder 11, welches nach dem Schritt b/ oder bl/ die folgenden Schritte umfasst:
c/ Einschalten des zweiten Dampferzeugers,
d/ Sprühen des von dem zweiten Dampferzeuger erzeugten Dampfes auf die Innenfläche des Fahrzeugs und gleichzeitig Ansaugen der Luft und des Staubes oder Blasen von Luft parallel zu und in einem Abstand von dem gesprühten Dampf.

## Claims

1. Cleaning installation (1) for vehicles, comprising at least:
- a water supply source (2);
- a first steam generator (3) connected upstream to the water supply source, **characterized in that** it further comprises:
- a suction or blowing device (6) suitable for blowing air and for suction in a mode of operation opposite to the blowing mode;
- a cleaning lance (5) comprising:
• a first pipe (43, 54) connected to the first steam generator,
• a second pipe (60, 61, 55) arranged essentially parallel to the first pipe and connected to the suction or blowing device,
installation in which the operation of the suction or blowing device is slaved to the operation of the first steam generator so as to be capable of blowing air or suction at the outlet of the second pipe simultaneously with and at a distance from the spraying of steam at the outlet of the first pipe.

2. Cleaning installation (1) for vehicles according to Claim 1, comprising a second steam generator (4) distinct from the first steam generator and also connected to the water supply source, the second steam generator (4) being also connected to the first pipe of the lance, the first steam generator comprising a boiler of capacity smaller than that of the second steam generator.

3. Cleaning installation for vehicles according to Claim 2, the first steam generator being suitable for generating steam within a shorter time than the second generator.

4. Cleaning installation for vehicles according to one of the preceding claims, comprising at least one photovoltaic panel (8) connected to the first generator and/or to the suction or blowing device, and to the second steam generator where present, in order to supply this/these with electricity.

5. Cleaning installation for vehicles according to one of the preceding claims, comprising at least one wind turbine (7) connected to the first generator and/or to the suction or blowing device, and to the second steam generator where present, in order to supply this/these with electricity.

6. Cleaning installation for vehicles according to Claim 4 or 5, comprising at least one battery (9) connected to the photovoltaic panel(s) and/or to the wind turbine in order to store the electricity produced, the battery being also connected to the first generator and/or to the suction or blowing device, and to the second steam generator where present, in order to supply this/these with electricity.

7. Cleaning installation for vehicles according to one of the preceding claims, the water supply source (2) comprising:
- a rainwater collection device (22) and a storage reservoir (25) connected to the collection device, the reservoir being connected to the first steam generator, and to the second steam generator where present,
- preferably means for agitating the collected and stored water, these means being arranged in the storage reservoir, the storage reservoir being preferably arranged relative to the first steam generator, and to the second steam generator where present, so as to supply this/these with rainwater by gravity flow.

8. Cleaning installation according to one of the preceding claims, comprising a sole receiver (11) connected at the downstream end to the water supply source in order to heat the water prior to its entry into the first steam generator, and into the second steam generator where present.

9. Cleaning installation according to one of the preceding claims, comprising an aspirated dust recovery bin (10) connected at the upstream end to the second pipe and at the downstream end to the suction device.

10. Operating method for a cleaning installation for vehicles according to one of Claims 1 to 9, for the purpose of cleaning the exterior of a vehicle, comprising the following steps:
a/ switching on the first steam generator,
b/ spraying the steam generated by the first generator onto the exterior surface of the vehicle, and at the same time blowing air parallel to and at a distance from the sprayed steam.

11. Operating method for a cleaning installation for vehicles according to one of Claims 1 to 9, for the purpose of cleaning, disinfecting and ameliorating the interior of a vehicle, comprising the following steps:
a1/ switching on the first steam generator,
b1/ spraying the steam generated by the first generator onto the interior surface of the vehicle, and at the same time aspirating the air and the dust parallel to and at a distance from the sprayed steam

12. Operating method according to Claim 10 or 11, comprising, after step b/ or b1/, the following steps:
c/ switching on the second steam generator,
d/ spraying the steam generated by the second generator onto the interior surface of the vehicle, and at the same time aspirating the air and the dust, or blowing air, parallel to and at a distance from the sprayed steam.
